# EUROPEAN PATENT SPECIFICATION

(11) **EP 3 428 566 B1**
(45) Date of publication and mention of the grant of the patent: **22.07.2020**
(21) Application number: 17785755.4
(22) Date of filing: 30.03.2017
(51) Int. Cl.: F28D 20/02

(54) **REGENERATIVE HEAT EXCHANGER**
REGENERATIVER WÄRMETAUSCHER
ÉCHANGEUR DE CHALEUR À RÉGÉNÉRATION

(30) Priority: 22.04.2016 JP 2016085887
(43) Date of publication of application: 16.01.2019
(73) Proprietor: Mitsubishi Electric Corporation, Chiyoda-ku Tokyo 100-8310 (JP)
(72) Inventor: SUZUKI, Shunkei, Tokyo 100-8310 (JP); IPPOSHI, Shigetoshi, Tokyo 100-8310 (JP); YAJI, Yoshikazu, Tokyo 100-8310 (JP); NOMURA, Yasumitsu, Tokyo 100-8310 (JP); NAKAZONO, Junichi, Tokyo 100-8310 (JP); TOKIZAKI, Shinya, Tokyo 100-8310 (JP)
(74) Representative: Trinks, Ole
(86) International application number: PCT/JP2017/013361
(87) International publication number: WO 2017/183413

(56) References cited:
- EP-A2- 1 098 157
- DE-C1- 19 953 113
- DE-U1-202012 103 717
- GB-A- 2 489 011
- JP-A- S4 925 547
- JP-A- S5 680 696
- JP-A- S5 712 256
- JP-A- S5 712 256
- JP-A- S5 733 792
- JP-A- H02 219 987
- JP-A- H02 219 987
- JP-A- S54 146 054
- JP-A- S54 146 054
- JP-A- S54 146 058
- JP-A- S56 100 263
- JP-A- S56 102 691
- JP-A- S56 102 691
- JP-A- S63 113 299

## Description

### Technical Field

The present invention relates to a regenerative heat exchange apparatus that includes a heat storage tank filled with a latent heat storage material, and a heat exchanger. The present invention relates, more particularly, to a regenerative heat exchange apparatus as defined in the preamble of claim 1 and as illustrated in DE 20 2012 103 717 U1.

### Background Art

To bridge a temporal gap between demand and supply of heat energy, conventional heat exchange apparatuses employ heat storage materials in which heat can be temporarily stored for later use when the heat is needed. Among such heat storage materials, a latent heat storage material, which utilizes latent heat produced during liquid-solid phase change, is used due to its high heat storage density per volume. In this regard, a solid phase of a heat storage material generally exhibits low thermal conductivity. This means that when heat energy is transferred in and out of the heat storage material during storage and rejection of heat, the solid phase acts as a thermal resistance to inhibit the entry and exit of heat. Further, a heat storage material undergoes a large volume change when solidifying from a liquid phase to a solid phase. This causes the heat transfer surface to be exposed, leading to deteriorated heat exchange performance.

Accordingly, the regenerative heat exchange apparatus described in Patent Literature 1 employs the following configuration. A heat source that covers the bottom surface of a heat storage tank, and a heat source placed perpendicular to the bottom surface are provided to prevent formation of air gaps within the heat storage tank. Further, convection of the melted latent heat storage material is utilized to facilitate melting of the remaining solid phase of the latent heat storage material.

### Citation List

### Patent Literature

Patent Literature 1: Japanese Unexamined Patent Application Publication JP No. 58-178191 A

### Summary of Invention

### Technical Problem

With the regenerative heat exchange apparatus described in Patent Literature 1, if the heat storage material within the heat storage tank solidifies, to melt the solid phase of the heat storage material that precipitates around the heat exchanger, it is necessary to melt the solid phase of the heat storage material within the entire heat storage tank. This increases the time required for heat storage. Further, with this regenerative heat exchange apparatus, the rate of heat exchange decreases as the solid phase grows. Consequently, if the regenerative heat exchange apparatus is used under conditions where the required heat quantity increases or decreases, the volume of the heat exchange portion increases, leading to increased size of the apparatus.

The present invention has been made to address the above-mentioned problem, and accordingly it is an object of the present invention to provide a regenerative heat exchange apparatus with which heat storage can be performed in a short time, and when a solid phase of a heat storage material precipitates on the heat transfer surface, the solid phase can be detached by melting by inputting heat for a short period of time.

### Solution to Problem

A regenerative heat exchange apparatus according to an embodiment of the present invention is defined in claim 1.

### Advantageous Effects of Invention

With the regenerative heat exchange apparatus according to an embodiment of the present invention, a liquid passage and a heat medium passage are disposed adjacent to each other, and a first straight pipe portion, which is a portion inside the liquid passage where a liquid flows horizontally, is located vertically lower than a second straight pipe portion of the heat medium passage that is in a set with the first straight pipe portion. Consequently, a solid phase that has precipitated around the liquid passage can be quickly melted away by the heat medium supplied to the heat medium passage. As a result, when the required heat quantity increases, heat output can be increased through direct heat exchange between the liquid and the heat medium.

### Brief Description of Drawings

- FIG. 1: is a diagram exemplarily illustrating an internal structure of a regenerative heat exchange apparatus according to Embodiment 1 of the present invention.
- FIG. 2: is a cross-sectional view of a liquid passage and a heat medium passage that are disposed inside a heat storage tank of the regenerative heat exchange apparatus according to Embodiment 1 of the present invention.
- FIG. 3: is a schematic view illustrating melting and detachment of a solid phase of a heat storage material that has precipitated around a liquid passage of the regenerative heat exchange apparatus according to Embodiment 1 of the present invention.
- FIG. 4: is an enlarged view of the portion A illustrated in FIG. 1.
- FIG. 5: is a cross-sectional view taken along arrow lines B-B illustrated in FIG. 4.
- FIG. 6: is an explanatory view of a regenerative heat exchange apparatus according to Embodiment 1 of the present invention, with sets of first and second straight pipe portions being disposed in a staggered arrangement.
- FIG. 7: is a schematic view illustrating a fluid circuit that employs the regenerative heat exchange apparatus according to Embodiment 1 of the present invention.
- FIG. 8: is a cross-sectional view of a liquid passage, a heat medium passage, and a heat-storage-material-solid-phase dividing plate of a regenerative heat exchange apparatus according to Embodiment 2 of the present invention.
- FIG. 9: is a cross-sectional view of a liquid passage, a heat medium passage, and a heater of a regenerative heat exchange apparatus according to Embodiment 3 of the present invention.
- FIG. 10: is a cross-sectional view of a regenerative heat exchange apparatus according to Embodiment 4 of the present invention, illustrating the relationship between a liquid passage, a heat medium passage, and a heat-storage-material-solid-phase dividing plate.
- FIG. 11: is a cross-sectional view of a regenerative heat exchange apparatus according to Embodiment 5 of the present invention, illustrating the relationship between a liquid passage, a heat medium passage, and a heat-storage-material-solid-phase dividing plate.
- FIG. 12: is a cross-sectional view taken along arrow lines C-C illustrated in FIG. 11.

### Description of Embodiments

### Embodiment 1

Regenerative heat exchange apparatuses according to embodiments of the present invention will be described below with reference to the drawings. In the following description of the embodiments, a structure, a material, or other features described with reference to a given embodiment may be, for example, replaced with or added to a structure, a material, or other features described with reference to another embodiment as long as no technical inconsistency arises as a result.

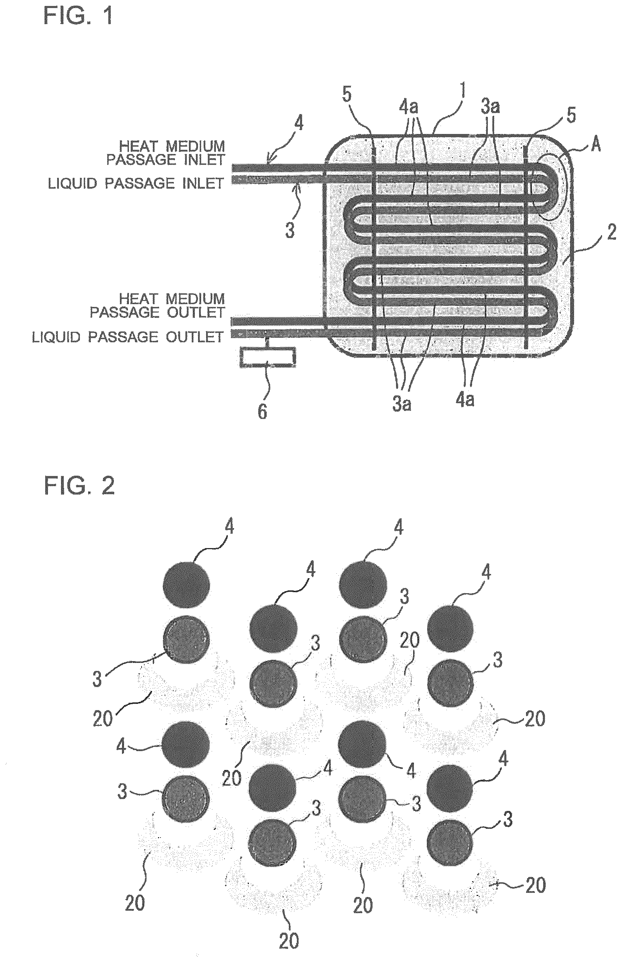

FIG. 1 is a diagram exemplarily illustrating an internal structure of a regenerative heat exchange apparatus according to Embodiment 1 of the present invention. FIG. 2 is a cross-sectional view of a liquid passage and a heat medium passage that are disposed inside a heat storage tank of the regenerative heat exchange apparatus according to Embodiment 1 of the present invention. In one example, the regenerative heat exchange apparatus according to Embodiment 1 illustrated in Figs. 1 and 2 employs a coil-tank heat exchage system. The regenerative heat exchage apparatus includes a heat storage tank 1, a heat storage material 2 charged into the heat storage tank 1, a liquid passage 3 that obtains heat from the heat storage material 2, a heat medium passage 4 that provides heat to the heat storage material 2, a heat-storage-material-solid-phase dividing plate 5 positioned to cross the liquid passage 3 and the heat medium passage 4, and a temperature sensor 6 located beside the outlet where the liquid passage 3 leaves the heat storage tank 1. The regenerative heat exchange apparatus according to Embodiment 1 further includes a flow rate control unit 9 that controls the flow rate of a liquid through the liquid passage 3 and the flow rate of a heat medium through the heat medium passage 4.

The heat storage tank 1 contains the heat storage material 2, the liquid passage 3, and the heat medium passage 4. The heat storage tank 1 is made of a material that is resistant to corrosion by the heat storage material 2, such as stainless, iron, or a nickel chrome alloy.

The heat storage material 2 is a latent heat storage material whose melting point lies within the range of temperatures used. Unlike a sensible heat storage material that stores only sensible heat, such as water, a latent heat storage material is also able to store the heat of fusion, which is latent heat, and thus has a high heat storage density per unit volume. Accordingly, use of a latent heat storage material helps reduce the size of the heat storage tank 1 in comparison to use of a sensible heat storage material. As the heat storage material 2 changes in phase from solid to liquid when heated by the heat medium, the heat storage material 2 stores latent heat (the heat of fusion). Upon passage of a liquid used to receive heat, the heat storage material 2 has its heat taken away and solidifies from a liquid to a solid, rejecting heat.

As for specific examples of the heat storage material 2, examples of saturated hydrocarbon-based materials include straight-chain paraffin such as decane, undecane, dodecane, tridecane, tetradecane, pentadecane, hexadecane, heptadecane, octadecane, nonadecane, eicosane, heneicosane, docosan, tricosane, tetracosane, pentacosane, hexacosane, heptacosane, octacosane, nonacosane, triacontane, hentriacontane, dotriacontane, tritriacontane, tetratriacontane, pentatriacontane, hexatriacontane, heptatriacontane, octatriacontane, nonatriacontane, tetracontane, dotetracontane, tritetracontane, tetratetra tetracontane, hexatetracontane, octatetracontane, pentacontane, hexacontane, heptacontane, and hectane. Examples of fatty acid-based materials include palmitic acid, stearic acid, myristic acid, oleic acid, palmitoleic acid, y-linolenic acid, linoleic acid, arachidonic acid, α-linolenic acid, decanoic acid, pentadecanoic acid, heptadecanoic acid, behenic acid, lignoceric acid, decenoic acid, pentadecenoic acid, and myristoleic acid. Examples of metal-based materials include mercury, potassium, sodium, gallium, indium, bismuth, aluminum, zinc, silicon, magnesium, copper, tin, lead, cadmium, and an alloy including at least one of the above metals. Examples of sugar alcohol-based materials include D-threitol, L-threitol, DL-threitol, meso-erythritol, L-erythritol, D-erythritol, DL-erythritol, pentaerythritol, dipentaerythritol, xylitol, D-arabitol, L-arabitol, DL-arabitol, D-sorbitol, L-sorbitol, DL-sorbitol, D-mannitol, L-mannitol, and DL-mannitol. Examples of hydrated salt-based materials include potassium fluoride tetrahydrate, potassium chloride hexahydrate, lithium nitrate trihydrate, sodium acetate trihydrate, sodium thiosulfate pentahydrate, sodium sulfate decahydrate, disodium hydrogen phosphate, Iron chloride hexahydrate, magnesium sulfate heptahydrate, lithium acetate dihydrate, sodium hydroxide monohydrate, barium hydroxide octahydrate, strontium hydroxide octahydrate, aluminum ammonium sulfate hexahydrate, and aluminum potassium sulfate hexahydrate. Examples of molten salt-based materials include aluminum chloride, lithium nitrate, sodium nitrate, potassium nitrate, lithium hydroxide, potassium chloride, lithium chloride, magnesium chloride, potassium chloride, potassium fluoride, lithium fluoride, lithium carbonate, potassium carbonate, barium nitrate, and sodium carbonate. Other example materials include clathrate hydrates such as tetrabutylammonium bromide, and water. Other than those mentioned above, any material can be used as long as the material has a melting point within the range of temperatures used and undergoes liquid-solid phase change.

The liquid passage 3 is a passage covered by the heat storage material 2, and receives heat from the heat storage material 2. The liquid passage 3 has a first straight pipe portion 3a through which a liquid flows horizontally. As the material of the liquid passage 3, for example, a metal such as copper, aluminum, stainless, titanium, or a nickel chrome alloy, or a resin such as polypropylene, polyethylene terephthalate, polyethylene, or polycarbonate is used. The liquid passage 3 used is in the form of, for example, a circular pipe, a multi-hole pipe, a flat pipe, or a twisted pipe. A pipe with an inside diameter of 1 to 20 mm and a pipe wall thickness of 0.3 to 2.0 mm is preferably used as the liquid passage 3. As the liquid that flows through the liquid passage 3, water, silicone oil, or brine such as ethylene glycol or propylene glycol is used.

The heat medium passage 4 is covered by the heat storage material 2, and provides heat to the heat storage material 2. The heat medium passage 4, which is adjacent to and disposed side by side with (hereinafter referred to as "in a set with") the liquid passage 3, has a second straight pipe portion 4a through which a heat medium flows horizontally. As the material of the heat medium passage 4, a metal such as copper, aluminum, stainless, titanium, or a nickel chrome alloy, or a resin such as polypropylene, polyethylene terephthalate, polyethylene, or polycarbonate is used. The heat medium passage 4 used is in the form of, for example, a circular pipe, a multi-hole pipe, a flat pipe, or a twisted pipe. A pipe with an inside diameter of 1 to 20 mm and a pipe wall thickness of 0.3 to 2.0 mm is preferably used as the heat medium passage 4. Examples of the liquid that flows through the heat medium passage 4 include water, silicone oil, or brine such as ethylene glycol or propylene glycol.

As illustrated in FIG. 1, the first straight pipe portion 3a of the liquid passage 3 and the second straight pipe portion 4a of the heat medium passage 4 are disposed in a set and arranged in multiple stages (six stages in FIG. 1) in the up-down direction, with the first straight pipe portion 3a being located vertically lower than the second straight pipe portion 4a. The second straight pipe portions 4a of the heat medium passage 4 that are adjacent in the up-down direction are connected at their one end, resulting in a configuration such that the heat medium passage 4 meanders in the up-down direction. Likewise, the first straight pipe portions 3a of the liquid passage 3 that are adjacent in the up-down direction are connected at their one end, resulting in a configuration that the liquid passage 3 meanders in the up-down direction.

The heat-storage-material-solid-phase dividing plate 5 has a through-hole 5c that is penetrated by the liquid passage 3 and the heat medium passage 4. The heat-storage-material-solid-phase dividing plate 5 is positioned to cross the outer periphery of each of the liquid passage 3 and the heat medium passage 4. The heat-storage-material-solid-phase dividing plate 5 is used for the following purpose: when heat is taken away from the heat storage material 2 by the liquid passage 3 and the solid phase of the heat storage material 2 precipitates, the heat-storage-material-solid-phase dividing plate 5 transfers the heat from the heat medium to the heat storage material 2 to divide the solid phase in a direction that crosses the liquid passage 3. The heat-storage-material-solid-phase dividing plate 5 is preferably made of a material with high thermal conductivity, for example, copper, aluminum, stainless, titanium, or a nickel chrome alloy. As the heat-storage-material-solid-phase dividing plate 5, a plate with a thickness of, for example, 0.3 to 2 mm is preferably used.

The temperature sensor 6 detects the outlet temperature of the liquid passage 3. In a heat rejection process, if a solid phase of the heat storage material 2 precipitates on the outer periphery of the liquid passage 3, the solid phase acts as a thermal resistance and impedes a rise in liquid temperature. If the liquid supply is continued in this state, the liquid temperature at the outlet does not rise to a desired temperature. Accordingly, it is necessary to detect the liquid temperature at the outlet, and supply the heat medium to the heat medium passage 4 when the liquid temperature at the outlet has become less than or equal to a predetermined temperature. It is desired that the flow rate control unit 9 be able to control the rate of supply of the heat medium based on the temperature detected by the temperature sensor 6. The supply of the heat medium to the heat medium passage 4 is stopped once the liquid temperature at the outlet has become greater than or equal to the predetermined temperature. In this regard, by further detecting the outlet temperature of the heat medium passage 4 at this time, it is possible to stop the supply of the heat medium when the temperature of the heat medium has become greater than or equal to a predetermined temperature, even when liquid supply to the liquid passage 3 is being stopped.

The following describes each step of storage and rejection of heat into the heat storage material 2 in the regenerative heat exchange apparatus according to Embodiment 1. When the regenerative heat exchange apparatus is at a temperature less than or equal to the melting point of the heat storage material 2, the heat storage material 2 is present in solid state within the heat storage tank 1.

In a heat storage process, the heat medium is supplied to the heat medium passage 4, and heat is given to the heat storage material 2 through heat exchange between the heat storage material 2 and the heat medium. The heat storage material 2 gradually rises in temperature, and begins to melt once its temperature has reached a temperature greater than or equal to the melting point. The heat storage process is regarded complete when the heat storage material 2 has completely melted and almost no temperature difference is observed and hence no heat exchange is performed between the heat medium and the heat storage material 2.

In a heat rejection process, as the liquid is supplied to the liquid passage 3, the heat storage material 2 and the liquid exchange heat, and the liquid obtains heat from the heat storage material 2. The heat storage material 2 gradually drops in temperature, and begins to solidify once its temperature has reached a temperature less than or equal to the melting point. Once solidified, the heat storage material 2 acts as a thermal resistance. This thermal resistance increases with increasing thickness of the solid phase, leading to reduced rate of heat exchange.

A heat storage-heat rejection process refers to a process that simultaneously performs the required heat storage and heat rejection when the liquid temperature at the outlet of the heat storage tank 1 has become less than or equal to a target temperature. To prevent the liquid temperature from becoming less than or equal to a required temperature, when the liquid temperature has reached a temperature less than or equal to a target temperature, the heat medium is supplied simultaneously with liquid supply. In this regard, by placing the liquid passage 3 and the heat medium passage 4 adjacent to each other, the liquid in the liquid passage 3 obtains heat from the heat medium in addition to the heat from the heat storage material 2 in the surroundings, and consequently rises in temperature. The heat medium in the heat medium passage 4 gives heat to the liquid in the liquid passage 3, and at the same time, the heat medium gives heat to the heat storage material 2 in the surroundings to thereby melt the solid phase of the heat storage material 2. In other words, the adjacent placement of the liquid passage 3 and the heat medium passage 4 makes it possible to perform heat storage and heat rejection simultaneously.

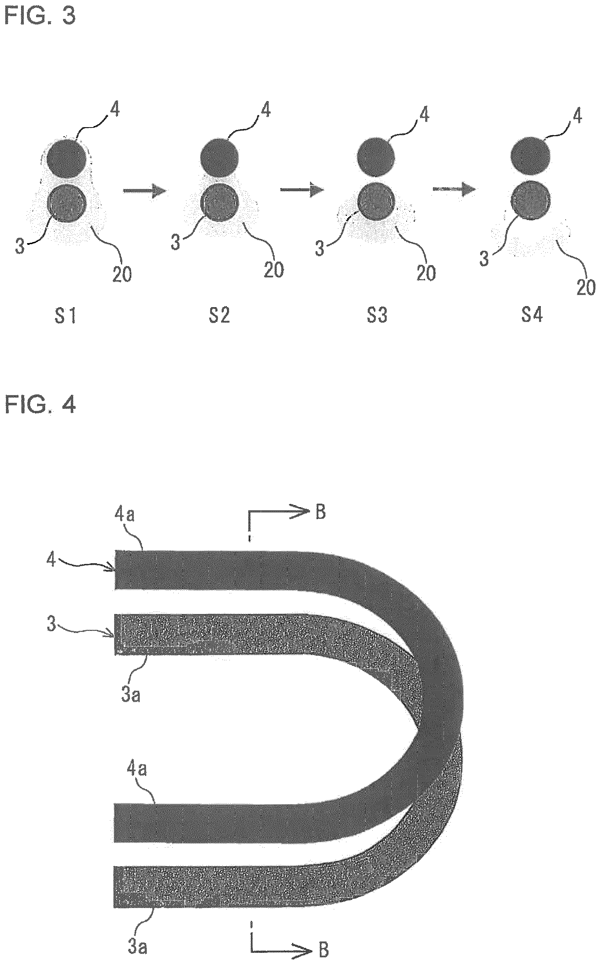

Next, the exchange of heat between the liquid passage 3 and the heat medium passage 4 will be described with reference to FIG. 3. FIG. 3 schematically illustrates melting and detachment of a solid phase of the heat storage material that has precipitated around the liquid passage of the regenerative heat exchange apparatus according to Embodiment 1 of the present invention.

Step S1 shows a state in which, as the liquid is supplied to the liquid passage 3, heat is taken away from the heat storage material 2 that is present in the vicinity of the outer periphery of the liquid passage 3, resulting in precipitation of a solid phase of the heat storage material 2. In step S1, heat transfer from the liquid passage 3 causes a heat-storage-material solid phase 20 to precipitate also around the heat medium passage 4. As the liquid is supplied, the heat-storage-material solid phase 20 increases in thickness, causing the liquid temperature at the outlet of the heat storage tank 1 to gradually decrease.

Step S2 shows a state in which the heat medium is being supplied to the heat medium passage 4. In step S2, the heat medium supplied to the heat medium passage 4 first gives heat to the heat-storage-material solid phase 20 present around the heat medium passage 4. The heat-storage-material solid phase 20 thus begins to melt.

Step S3 shows a state in which the supply of the heat medium to the heat medium passage 4 is further continued from the state of step S2. In step S3, the heat-storage-material solid phase 20 around the heat medium passage 4 has completely melted with the heat given from the heat medium, and the heat-storage-material solid phase 20 around the liquid passage 3 beings to melt.

Step S4 shows a state in which the supply of the heat medium to the heat medium passage 4 is further continued from the state of step S3. In step S4, the heat-storage-material solid phase 20 around the area of the liquid passage 3 near the heat medium passage 4 melts, and the remaining heat-storage-material solid phase 20 around the liquid passage 3 detaches from the liquid passage 3. This causes the surface of the liquid passage 3 to be exposed, leading to increased heat exchange capacity.

In this regard, if the heat storage material 2 has a higher density in solid state than in liquid state, melting the vertically upper portion of the liquid passage 3 causes the heat-storage-material solid phase 20 to be stripped off vertically downward due to the difference in specific gravity. Consequently, the surface of the liquid passage 3 can be quickly exposed, thus quickly increasing the heat exchange capacity. This configuration helps prevent the liquid temperature at the outlet of the heat storage tank 1 from decreasing to a temperature less than or equal to a target temperature, thus avoiding stopping of liquid supply. By contrast, if the heat storage material 2 is, for example, water, the heat storage material 2 has a lower density in solid state than in liquid state. Accordingly, to quickly strip the solid (ice) off the liquid passage 3, the heat medium passage 4 needs to be disposed under the liquid passage 3.

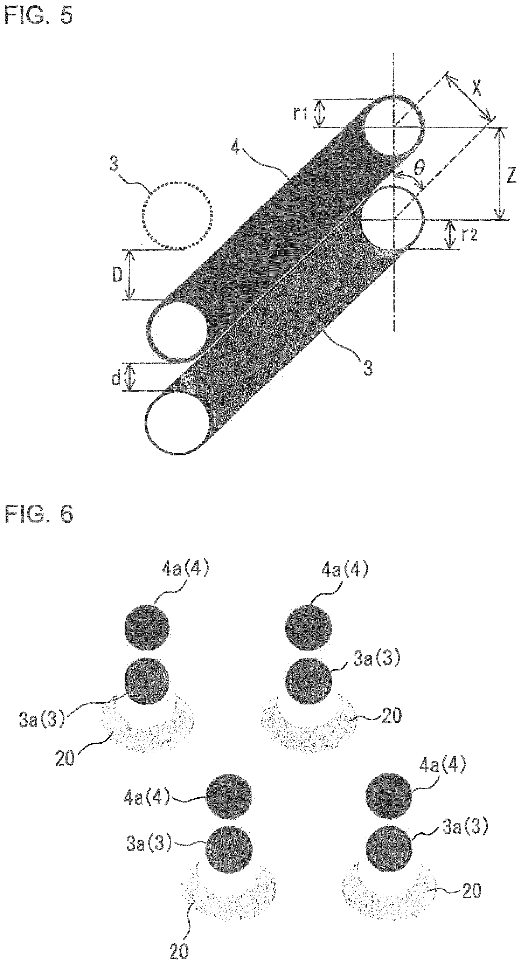

FIG. 4 is an enlarged view of the portion A illustrated in FIG. 1. FIG. 5 is a cross-sectional view taken along arrow lines B-B illustrated in FIG. 4. If the end portions of the heat medium passage 4 and the liquid passage 3 arranged in a set are bent in an U-shape as illustrated in FIG. 4, bending the U-shaped portion obliquely relative to the vertical direction as illustrated in FIG. 5 ensures that the positional relationship between the set of the heat medium passage 4 and the liquid passage 3 relative to the vertical direction can be maintained also for their end portion. In other words, the connecting part of two second straight pipe portions 4a that are adjacent in the up-down direction is located vertically higher than the connecting part of two first straight pipe portions 3a that are adjacent in the up-down direction. At this time, as illustrated in FIG. 5, interference between passages can be avoided by ensuring that the following relationship be satisfied: (r1+r2+d)sinθ≥r1+r2, where r1 is the radius of the heat medium passage 4, r2 is the radius of the liquid passage 3, d is the distance between the outer periphery of the first straight pipe portion 3a of the liquid passage 3 and the outer periphery of the second straight pipe portion 4a of the heat medium passage 4 that is in a set with the liquid passage 3, and θ is the bend angle relative to the vertical direction.

If the first straight pipe portion 3a and the second straight pipe portion 4a are disposed in a set and arranged in multiple stages in the up-down direction as illustrated in FIG. 1, the second straight pipe portion 4a in a given set is disposed such that its distance "d" from the first straight pipe portion 3a being in a set with the second straight pipe portion 4a is less than its distance "D" from the first straight pipe portion 3a in another set (d<D) as illustrated in FIG. 5. This configuration ensures that the heat from a given second straight pipe portion 4a is transferred preferentially to the first straight pipe portion 3a that is in a set with the second straight pipe portion 4a.

FIG. 6 is an explanatory view of a regenerative heat exchange apparatus according to Embodiment 1 of the present invention, with sets of first and second straight pipe portions disposed in a staggered arrangement. As illustrated in FIG. 6, if the sets of the first straight pipe portion 3a and the second straight pipe portion 4a are disposed in a staggered arrangement as viewed in vertical cross-section of the heat storage tank 1, the heat-storage-material solid phase 20 is readily allowed to sediment toward the vertically lower portion of the heat storage tank 1 when stripped off. This helps increase the heat exchange capacity.

Further, the diameter of the second straight pipe portion 4a of the heat medium passage 4 is made smaller than the diameter of the first straight pipe portion 3a of the liquid passage 3. This helps reduce the precipitation of the heat-storage-material solid phase 20 around the heat medium passage 4, thus reducing the time required to melt the heat-storage-material solid phase 20. As a result, the heat exchange capacity can be increased quickly.

If the number of heat medium passages 4, which are in a set with the liquid passages 3, is greater than the number of liquid passages 3, the time required to melt the heat-storage-material solid phase 20 with the heat from the heat medium passages 4 is reduced, leading to enhanced heat exchange performance.

Although FIG. 1 illustrates a coil-tank heat exchange system as an exemplary regenerative heat exchange apparatus according to Embodiment 1, the similar effects as those mentioned above can be obtained also with shell-and-tube, double-pipe, and plate-fin heat exchange systems. In melting the heat-storage-material solid phase 20 by the heat medium, if the heat-storage-material solid phase 20 is attached over a long length at this time, such a melted heat-storage-material solid phase 20 does not detach quickly. The regenerative heat exchange apparatus according to Embodiment 1 addresses this problem as follows. That is, to ensure that the heat-storage-material solid phase 20 does not form over a long length along the liquid passage 3, the heat-storage-material-solid-phase dividing plate 5 is disposed to cross the liquid passage 3 and the heat medium passage 4. The heat-storage-material-solid-phase dividing plate 5 is used to divide the heat-storage-material solid phase 20 that has precipitated around the liquid passage 3, in a direction that crosses the liquid passage 3 by the heat transferred from the heat medium flowing in the heat medium passage 4. The divided heat-storage-material solid phase 20 is quickly stripped off the liquid passage 3, leaving the heat transfer surface of the liquid passage 3 exposed. This makes it possible to quickly increase the heat exchange capacity.

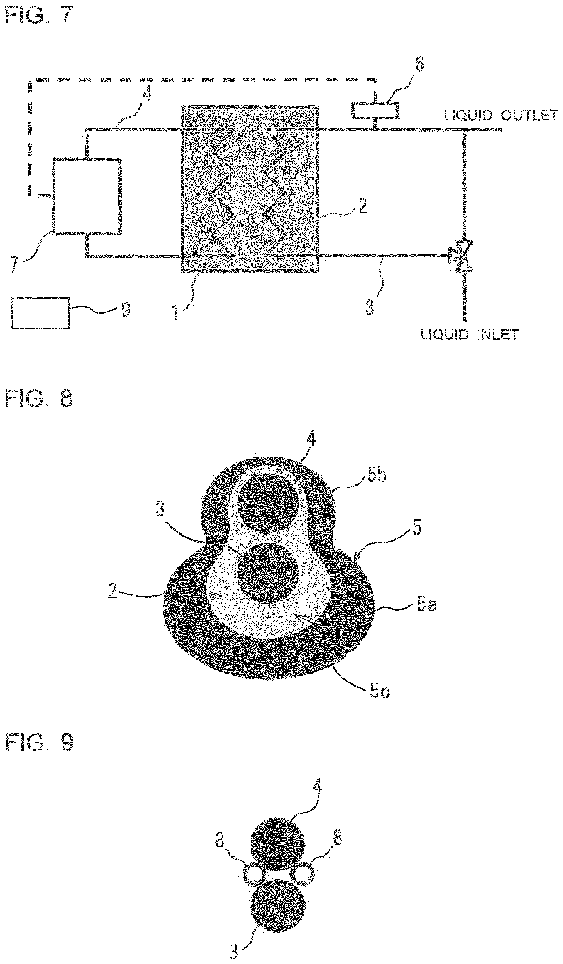

Next, the temperature sensor 6 used to control storage and rejection of heat will be described with reference to FIG. 7. FIG. 7 schematically illustrates a fluid circuit that employs the regenerative heat exchange apparatus according to Embodiment 1 of the present invention. In the heat rejection process, as a liquid is supplied to the liquid passage 3 and heat is taken away from the heat storage material 2 by the liquid, the heat-storage-material solid phase 20 precipitates around the surface of the liquid passage 3. The heat-storage-material solid phase 20 acts as a thermal resistance due to its low thermal conductivity. Consequently, the heat given to the liquid from the heat storage material 2 decreases. As the liquid supply is further continued, the liquid temperature at the outlet of the heat storage tank 1 eventually reaches a temperature less than or equal to a desired temperature, causing the liquid supply to be stopped. Accordingly, as illustrated in FIG. 7, the flow rate control unit 9 performs the following heat storage-heat rejection process. That is, the temperature of the liquid passage 3 at the outlet of the heat storage tank 1 is detected by the temperature sensor 6, and the heat medium is supplied from a heat source 7 to the heat medium passage 4 if the detected temperature has become less than or equal to a target temperature. Because the rate of heat rejection is determined by the thickness of the heat-storage-material solid phase 20, whether the heat-storage-material solid phase 20 has been stripped off can be determined by calculation from the liquid outlet temperature. Accordingly, the heat rejection process is regarded complete when the liquid outlet temperature detected by the temperature sensor 6 has become greater than or equal to a target temperature.

Now, a case is considered where liquid supply is stopped in the middle of the heat storage-heat rejection process, and then a transition to the heat storage process is made. In this case, it is not possible to identify the time of completion of the heat rejection process from the outlet temperature of the liquid passage 3. Accordingly, with the regenerative heat exchange apparatus, the temperature sensor 6 is also disposed in the same manner at the outlet where the heat medium passage 4 leaves the heat storage tank 1, and the heat storage process is regarded complete when the outlet temperature of the heat medium has become greater than or equal to a predetermined temperature.

As described above, with the regenerative heat exchange apparatus according to Embodiment 1, the liquid passage 3 and the heat medium passage 4 are disposed adjacent to each other, and the first straight pipe portion 3a where the liquid flows horizontally inside the liquid passage 3 is located vertically lower than the second straight pipe portion 4a of the heat medium passage 4 that is in a set with the first straight pipe portion 3a. Consequently, a solid phase that has precipitated around the liquid passage 3 can be quickly melted away by means of the heat medium supplied to the heat medium passage 4. As a result, when the required heat quantity increases, heat output can be quickly increased through direct heat exchange between the liquid and the heat medium.

With the regenerative heat exchange apparatus according to Embodiment 1, the flow rate control unit 9 controls the flow rate of the liquid through the liquid passage 3 and the flow rate of the heat medium through the heat medium passage 4 based on at least one of a liquid temperature and a heat medium temperature that have been detected by the temperature sensor 6. Consequently, the upper portion of the heat-storage-material solid phase 20 that has precipitated around the liquid passage 3 can be melted in preference to other portions. This enables quick detachment of the lower portion of the heat-storage-material solid phase 20 with a comparatively large specific gravity that has remained un-melted. As a result, the heat transfer surface of the liquid passage 3 can be exposed to thereby quickly increase the rate of heat exchange.

### Embodiment 2

Next, a regenerative heat exchange apparatus according to Embodiment 2 of the present invention will be described with reference to FIG. 8. FIG. 8 is a cross-sectional view of a liquid passage, a heat medium passage, and a heat-storage-material-solid-phase dividing plate of the regenerative heat exchange apparatus according to Embodiment 2 of the present invention. A description of components identical to those of the regenerative heat exchange apparatus according to Embodiment 1 will be omitted as appropriate.

With the regenerative heat exchange apparatus according to Embodiment 2, the heat-storage-material-solid-phase dividing plate 5 has a shape such that the heat-storage-material-solid-phase dividing plate 5 crosses the liquid passage 3 and the heat medium passage 4. The heat-storage-material-solid-phase dividing plate 5 has a second covering 5b that covers the outer peripheral surface of the heat medium passage 4, and a first covering 5a that covers the outer peripheral surface of the liquid passage 3. With the regenerative heat exchange apparatus according to Embodiment 2, the heat-storage-material-solid-phase dividing plate 5 is positioned to cross the liquid passage 3 and the heat medium passage 4. This helps reduce diffusion of heat from the heat medium passage 4 to a liquid phase of the heat storage material in the surroundings. As a result, in the heat storage process and the heat storage-heat rejection process, the heat-storage-material solid phase 20 can be melted efficiently, and stripped off the liquid passage 3. That is, the regenerative heat exchange apparatus according to Embodiment 2 reduces the time taken for the heat-storage-material solid phase 20 to be divided in a direction that crosses the liquid passage 3. This helps avoid situations where, as liquid supply is continued, the liquid temperature at the outlet of the heat storage tank 1 becomes less than or equal to a desired temperature and the liquid supply consequently stops.

Further, the heat-storage-material-solid-phase dividing plate 5 is shaped such that the length of the liquid passage 3 in the radial direction is greater than the length of the heat medium passage 4 in the radial direction. Specifically, the heat-storage-material-solid-phase dividing plate 5 is formed in a shape such that the average distance between the outer peripheral surface of the liquid passage 3 and the inner peripheral surface of the first covering 5a is greater than the average distance between the outer peripheral surface of the heat medium passage 4 and the inner peripheral surface of the second covering 5b.

The above-mentioned shape of the heat-storage-material-solid-phase dividing plate 5 ensures that, in the heat storage process and the heat storage-heat rejection process, the heat of the heat medium supplied to the heat medium passage 4 is efficiently transferred to the heat-storage-material solid phase 20 that has precipitated around the liquid passage 3. This reduces the time taken for the heat-storage-material solid phase 20 to be divided in a direction that crosses the liquid passage 3. Consequently, the heat storage process and the heat storage-heat rejection process are reduced in duration, which helps avoid stopping of liquid supply. In this regard, as the shape of the heat-storage-material-solid-phase dividing plate 5 resembles the cross-sectional shape of the heat-storage-material solid phase 20 that precipitates around the liquid passage 3 and the heat medium passage 4, transfer of heat from the heat medium to the heat-storage-material solid phase 20 becomes more efficient.

The heat-storage-material solid phase 20 is greater in density than the liquid phase of the heat storage material. Consequently, the thickness of the solid phase of the heat storage material 2 is greater in a region below the central portion of the liquid passage 3 than in a region above the central portion. Accordingly, the shape of the heat-storage-material-solid-phase dividing plate 5 is such that its inside diameter is greater in a region corresponding to the lower portion of the liquid passage 3 than in a region corresponding to the upper portion of the liquid passage 3. The heat-storage-material solid phase 20 that precipitates around the heat medium passage 4 has a greater thickness on the side facing the liquid passage 3. Accordingly, the inside diameter of the heat-storage-material solid phase 20 is greater in a region below the center of the heat medium passage 4 than in a region above the center.

Accordingly, the heat-storage-material-solid-phase dividing plate 5 is formed in a shape such that the average distance between the outer peripheral surface of the heat medium passage 4 and the inner peripheral surface of the second covering 5b in a region vertically lower than the second straight pipe portion 4a is less than the average distance between the outer peripheral surface of the liquid passage 3 and the inner peripheral surface of the first covering 5a in a region vertically lower than the first straight pipe portion 3a. The above-mentioned configuration of the regenerative heat exchange apparatus according to Embodiment 2 helps efficiently transfer heat from the heat medium passage 4 to the liquid passage 3, thus reducing the time required to melt and detach the heat-storage-material solid phase 20 that has precipitated around the liquid passage 3. This enables a quick increase in heat exchange capacity.

### Embodiment 3

Next, a regenerative heat exchange apparatus according to Embodiment 3 of the present invention will be described with reference to FIG. 9. FIG. 9 is a cross-sectional view of a liquid passage, a heat medium passage, and a heater of the regenerative heat exchange apparatus according to Embodiment 3 of the present invention. A description of components identical to those of the regenerative heat exchange apparatus according to Embodiments 1 and 2 will be omitted as appropriate.

As illustrated in FIG. 9, the regenerative heat exchange apparatus according to Embodiment 3 includes a heater 8 located vertically above the liquid passage 3. With the regenerative heat exchange apparatus according to Embodiment 3, if a situation arises where the heat from the heat medium passage 4 alone is not sufficient to bring the liquid to a temperature higher than or equal to a target temperature, the heater 8 can be energized to supplement the heat shortage. In addition to avoiding stopping of liquid supply, this configuration makes it possible to melt the heat storage material 2 precipitating around the liquid passage 3. As a result, the heat exchange capacity of the regenerative heat exchange apparatus can be quickly increased. As for the energization of the heater 8, consumption of unnecessarily large electric power by the heater 8 can be minimized by detecting the outlet temperature of the liquid passage 3 by the temperature sensor 6 and controlling the flow rate by the flow rate control unit 9.

### Embodiment 4

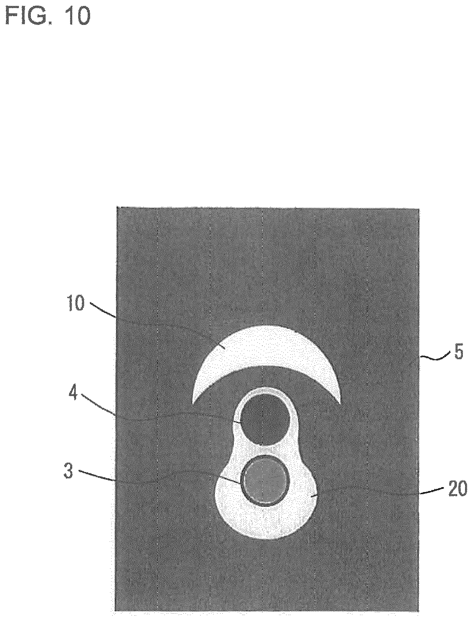

Next, a regenerative heat exchange apparatus according to Embodiment 4 of the present invention will be described with reference to FIG. 10. FIG. 10 is a cross-sectional view of the regenerative heat exchange apparatus according to Embodiment 4 of the present invention, illustrating the relationship between a liquid passage, a heat medium passage, and a heat-storage-material-solid-phase dividing plate. A description of components identical to those of the regenerative heat exchange apparatus according to Embodiments 1 to 3 will be omitted as appropriate.

As illustrated in FIG. 10, the regenerative heat exchange apparatus according to Embodiment 4 includes a slit 10 located vertically above the heat medium passage 4 within the plane of the heat-storage-material-solid-phase dividing plate 5. With the regenerative heat exchange apparatus according to Embodiment 4, the presence of the slit 10 reduces the transmission of heat to a region located vertically above the heat medium passage 4. Heat from the heat medium passage 4 can be thus efficiently transferred to the liquid passage 3 to reduce the time required to melt and detach the heat-storage-material solid phase 20 that has precipitated around the liquid passage 3. This makes it possible to quickly increase the heat exchange capacity.

Although not illustrated in detail in FIG. 10, if the regenerative heat exchange apparatus according to Embodiment 4 is further provided with slits positioned to the left and right of the heat medium passage 4, heat from the heat medium passage 4 can be efficiently transferred to the liquid passage 3 to further reduce the time required to melt and detach the heat-storage-material solid phase 20 that has precipitated around the liquid passage 3, thus making it possible to quickly increase the heat exchange capacity.

### Embodiment 5

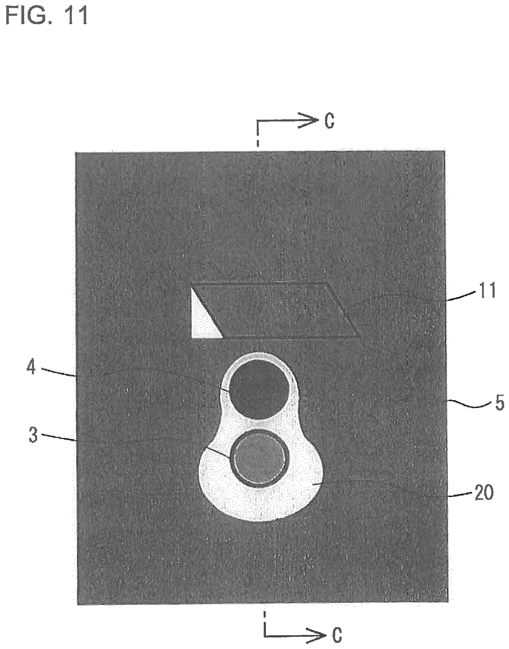

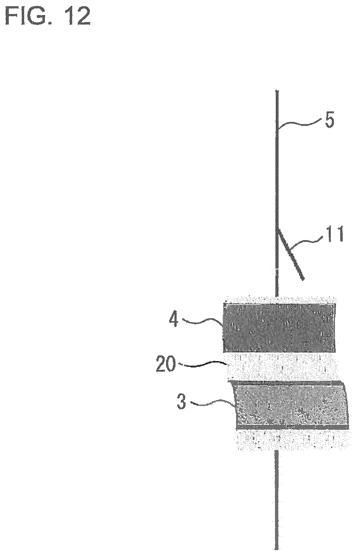

Next, a regenerative heat exchange apparatus according to Embodiment 5 of the present invention will be described with reference to Figs. 11 and 12. FIG. 11 is a cross-sectional view of the regenerative heat exchange apparatus according to Embodiment 5 of the present invention, illustrating the relationship between a liquid passage, a heat medium passage, and a heat-storage-material-solid-phase dividing plate. FIG. 12 is a cross-sectional view taken along arrow lines C-C illustrated in FIG. 11. A description of components identical to those of the regenerative heat exchange apparatus according to Embodiments 1 to 3 will be omitted as appropriate.

As illustrated in Figs. 11 and 12, the regenerative heat exchange apparatus according to Embodiment 5 includes a cut-and-raised portion 11 located vertically above the heat medium passage 4 within the plane of the heat-storage-material-solid-phase dividing plate 5. The cut-and-raised portion 11 is formed by cutting and raising a part of the heat-storage-material-solid-phase dividing plate 5 forward. The cut-and-raised portion 11 is formed by cutting and raising such that the cut in the cut area is located vertically lower than a part of the cut-and-raised portion 11 that is left uncut. With the regenerative heat exchange apparatus according to Embodiment 5, when heat given from the heat medium passage 4 is transferred to the liquid passage 3 via the heat-storage-material-solid-phase dividing plate 5, the presence of the cut-and-raised portion 11 minimizes transmission of heat in the vertically upward direction. This configuration of the regenerative heat exchange apparatus according to Embodiment 5 helps efficiently transfer heat from the heat medium passage 4 to the liquid passage 3, thus reducing the time required to melt and detach the heat-storage-material solid phase 20 that has precipitated around the liquid passage 3. As a result, the heat exchange capacity can be increased quickly.

Further, with the regenerative heat exchange apparatus according to Embodiment 5, the cut-and-raised portion 11 is formed by cutting and raising such that the cut in the cut area is located vertically lower than a part of the cut-and-raised portion 11 that is left uncut. Consequently, heat can be transferred from the heat medium passage 4 to the liquid passage 3 with further enhanced efficiency to thereby further reduce the time required to detach by melting the heat-storage-material solid phase 20 that has precipitated around the liquid passage 3. This makes it possible to quickly increase the heat exchange capacity. The configuration of the cut-and-raised portion 11 in Figs. 11 and 12 is illustrative of one example and should not be construed as being limiting. The cut-and-raised portion 11 is formed in various configurations that depend on the actual implementation conditions.

### Reference Signs List

- 1: heat storage tank
- 2: heat storage material
- 3: liquid passage
- 3a: first straight pipe portion
- 4: heat medium passage
- 4a: second straight pipe portion
- 5: heat-storage-material-solid-phase dividing plate
- 5a: first covering
- 5b: second covering
- 5c: through-hole
- 6: temperature sensor
- 7: heat source
- 8: heater
- 9: flow rate control unit
- 10: slit
- 11: cut-and-raised portion
- 20: heat-storage-material solid phase

## Claims

1. A regenerative heat exchange apparatus comprising:
- a heat storage tank (1);
- a heat storage material (2) disposed inside the heat storage tank (1), the heat storage material having a heat storage capability and a heat rejection capability;
- a liquid passage (3) covered by the heat storage material (2) inside the heat storage tank (1), the liquid passage (3) having a first straight pipe portion (3a) through which a liquid flows horizontally; and
- a heat medium passage (4) covered by the heat storage material (2) inside the heat storage tank (1), the heat medium passage (4) being adjacent to and in a set with the liquid passage (3), the heat medium passage (4) having a second straight pipe portion (4a) through which a heat medium flows horizontally, the heat medium being at a temperature higher than the liquid,
**characterised in that**
- the heat storage material (2) has a higher density in solid state than in liquid state,
- the liquid flowing in the first straight pipe portion (3a) obtains heat from the heat storage material (2) and solidifies the heat storage material in liquid state, the heat medium in the second straight pipe portion (4a) gives heat to the heat storage material (2) and melts the heat storage material (2) in solid state,
wherein the first straight pipe portion (3a) is located vertically lower than the second straight pipe portion (4a), that is in a set with the first straight pipe portion (3a).

2. The regenerative heat exchange apparatus of claim 1,
wherein the second straight pipe portion (4a) has a pipe diameter less than a pipe diameter of the first straight pipe portion (3a).

3. The regenerative heat exchange apparatus of claim 1 or 2,
wherein the heat medium passage (4) comprises passages in a number greater than the number of the liquid passages (3).

4. The regenerative heat exchange apparatus of any one of claims 1 to 3,
wherein the first straight pipe portion (3a) and the second straight pipe portion (4a) disposed in a set are arranged in multiple stages in an up-down direction,
wherein the second straight pipe portions (4a) of the heat medium passage (4) that are adjacent in the up-down direction are connected at their one end such that the heat medium passage (4) meanders in the up-down direction, and
wherein the first straight pipe portions (3a) of the liquid passage that are adjacent in the up-down direction are connected at their one end such that the liquid passage (3) meanders in the up-down direction.

5. The regenerative heat exchange apparatus of claim 4,
wherein a mean distance between the first straight pipe portion (3a) and the second straight pipe portion (4a) disposed in a set and arranged in multiple stages in the up-down direction is less than a distance between the second straight pipe portion (4a) in one stage and the first straight pipe portion (3a) in another stage adjacent to the one stage.

6. The regenerative heat exchange apparatus of claim 4 or 5,
wherein, when viewed in vertical cross-section of the heat storage tank (1), the first straight pipe portion (3a) and the second straight pipe portion (4a) disposed in a set and arranged in multiple stages in the up-down direction are disposed in a staggered arrangement.

7. The regenerative heat exchange apparatus of any one of claims 4 to 6,
wherein a connecting part of the second straight pipe portions (4a) that are adjacent in the up-down direction is located vertically higher than a connecting part of the first straight pipe portions (3a) that are adjacent in the up-down direction.

8. The regenerative heat exchange apparatus of any one of claims 1 to 7, further comprising:
- a temperature sensor (6) configured to detect at least one of a liquid temperature and a heat medium temperature, the liquid temperature being a temperature of the liquid flowing through the liquid passage (3), the heat medium temperature being a temperature of the heat medium flowing through the heat medium passage (4); and
- a flow rate control unit (9) configured to, based on a temperature detected by the temperature sensor (6), control a flow rate of the liquid through the liquid passage (3) and a flow rate of the heat medium through the heat medium passage (4).

9. The regenerative heat exchange apparatus of any one of claims 1 to 8, further comprising a dividing plate (5) positioned to cross the liquid passage (3) and the heat medium passage (4).

10. The regenerative heat exchange apparatus of claim 9,
wherein the liquid passage (3) and the heat medium passage (4) each have a tubular configuration,
wherein the dividing plate (5) includes
a first covering (5a) to cover an outer peripheral surface of the liquid passage (3),
a second covering (5b) to cover an outer peripheral surface of the heat medium passage (4), and
wherein an average distance between the outer peripheral surface of the liquid passage (3) and an inner peripheral surface of the first covering (5a) is greater than an average distance between the outer peripheral surface of the heat medium passage (4) and an inner peripheral surface of the second covering (5b).

11. The regenerative heat exchange apparatus of claim 10,
wherein the dividing plate (5) has a shape such that an average distance between an outer peripheral surface of the heat medium passage (4) and the inner peripheral surface of the second covering (5b) in a region vertically lower than the second straight pipe portion (4a) is less than an average distance between an outer peripheral surface of the liquid passage (3) and the inner peripheral surface of the first covering (5a) in a region vertically lower than the first straight pipe portion (3a).

12. The regenerative heat exchange apparatus of any one of claims 9 to 11,
wherein the dividing plate (5) includes a slit (10) located vertically above the second straight pipe portion (4a).

13. The regenerative heat exchange apparatus of any one of claims 9 to 11,
wherein the dividing plate includes a cut-and-raised portion (11), the cut-and-raised portion (11) being formed by cutting and raising a part of the dividing plate (5) located vertically above the second straight pipe portion (4a).

14. The regenerative heat exchange apparatus of claim 13,
wherein the cut-and-raised portion (11) is formed by cutting and raising such that a cut in a cut area of the cut-and-raised portion is located vertically lower than a part of the cut-and-raised portion (11) that is left uncut.

15. The regenerative heat exchange apparatus of any one of claims 1 to 14, further comprising a heater (8) located vertically above and adjacent to the liquid passage (3) to provide heat to the liquid passage (3).

## Patentansprüche

1. Regenerative Wärmeaustauschvorrichtung, welche Folgendes aufweist:
- einen Wärmespeicher (1);
- ein im Inneren des Wärmespeichers (1) angeordnetes Wärmespeichermaterial (2), wobei das Wärmespeichermaterial eine Wärmespeicherkapazität und eine Rückkühlungskapazität aufweist;
- einen Flüssigkeitskanal (3), welcher vom Wärmespeichermaterial (2) im Inneren des Wärmespeichers (1) bedeckt ist, wobei der Flüssigkeitskanal (3) einen ersten geraden Leitungsabschnitt (3a) aufweist, durch den eine Flüssigkeit horizontal fließt; und
- einen Wärmemediumkanal (4), welcher vom Wärmespeichermaterial (2) im Inneren des Wärmespeichers (1) bedeckt ist, wobei der Wärmemediumkanal (4) an den Flüssigkeitskanal (3) angrenzt und mit diesem ein Set bildet, wobei der Wärmemediumkanal (4) einen zweiten geraden Leitungsabschnitt (4a) aufweist, durch den ein Wärmemedium horizontal fließt, wobei das Wärmemedium eine Temperatur aufweist, die höher als die der Flüssigkeit ist,
**dadurch gekennzeichnet, dass**
- das Wärmespeichermaterial (2) im festen Zustand eine höhere Dichte als im flüssigen Zustand aufweist,
- die im ersten geraden Leitungsabschnitt (3a) fließende Flüssigkeit Wärme vom Wärmespeichermaterial (2) erhält und das im flüssigen Zustand befindliche Wärmespeichermaterial verfestigt, das Wärmemedium im zweiten geraden Leitungsabschnitt (4a) Wärme an das Wärmespeichermaterial (2) abgibt und das im festen Zustand befindliche Wärmespeichermaterial (2) schmelzen lässt,
wobei der erste gerade Leitungsabschnitt (3a) vertikal tiefer liegt als der zweite gerade Leitungsabschnitt (4a), welcher mit dem ersten geraden Leitungsabschnitt (3a) ein Set bildet.

2. Regenerative Wärmeaustauschvorrichtung gemäß Anspruch 1, wobei der zweite gerade Leitungsabschnitt (4a) einen Leitungsdurchmesser aufweist, der geringer als ein Leitungsdurchmesser des ersten geraden Leitungsabschnitts (3a) ist.

3. Regenerative Wärmeaustauschvorrichtung gemäß Anspruch 1 oder 2, wobei der Wärmemediumkanal (4) Känale in einer über der Anzahl der Flüssigkeitskanäle (3) liegenden Anzahl aufweist.

4. Regenerative Wärmeaustauschvorrichtung gemäß einem der Ansprüche 1 bis 3, wobei der erste gerade Leitungsabschnitt (3a) und der zweite gerade Leitungsabschnitt (4a), welche in einem Set angeordnet sind, in mehreren Stufen in einer Auf-Ab-Richtung angelegt sind,
wobei die zweiten geraden Leitungsabschnitte (4a) des Wärmemediumkanals (4), welche in Auf-Ab-Richtung aneinander angrenzen, an ihrem einen Ende angeschlossen sind, so dass der Wärmemediumkanal (4) meanderförmig in Auf-Ab-Richtung verläuft, und wobei die ersten geraden Leitungsabschnitte (3a) des Flüssigkeitskanals, die in Auf-Ab-Richtung aneinander angrenzen, an ihrem einen Ende angeschlossen sind, so dass der Flüssigkeitskanal (3) meanderförmig in Auf-Ab-Richtung verläuft.

5. Regenerative Wärmeaustauschvorrichtung gemäß Anspruch 4, wobei ein durchschnittlicher Abstand zwischen dem ersten geraden Leitungsabschnitt (3a) und dem zweiten geraden Leitungsabschnitt (4a), welche in einem Set angeordnet und in mehreren Stufen in Auf-Ab-Richtung angelegt sind, geringer ist als ein Abstand zwischen dem zweiten geraden Leitungsabschnitt (4a) in einer Stufe und dem ersten geraden Leitungsabschnitt (3a) in einer anderen Stufe, die an die eine Stufe angrenzt.

6. Regenerative Wärmeaustauschvorrichtung gemäß Anspruch 4 oder 5, wobei der erste gerade Leitungsabschnitt (3a) und der zweite gerade Leitungsabschnitt (4a), welche in einem Set angeordnet und in mehreren Stufen angelegt sind, bei Betrachtung im vertikalen Querschnitt des Wärmespeichertanks (1) zueinander versetzt angeordnet sind.

7. Regenerative Wärmeaustauschvorrichtung gemäß einem der Ansprüche 4 bis 6, wobei ein Verbindungsteil der in Auf-Ab-Richtung aneinander angrenzenden zweiten geraden Leitungsabschnitte (4a) vertikal höher liegt als ein Verbindungsteil der in Auf-Ab-Richtung aneinander angrenzenden ersten geraden Leitungsabschnitte (3a).

8. Regenerative Wärmeaustauschvorrichtung gemäß einem der Ansprüche 1 bis 7, welche darüber hinaus Folgendes aufweist:
- einen Temperaturfühler (6), welcher dazu konfiguriert ist, mindestens eine Temperatur der Flüssigkeit und eine Temperatur des Wärmemediums zu erfassen, wobei die Flüssigkeitstemperatur eine Temperatur der durch den Flüssigkeitskanal (3) fließenden Flüssigkeit, und die Temperatur des Wärmemediums eine Temperatur des durch den Wärmemediumkanal (4) fließenden Wärmemediums ist; und
- eine Durchsatzregeleinheit (9), welche dazu konfiguriert ist, basierend auf einer vom Temperaturfühler (6) erfassten Temperatur eine Durchflussrate der durch den Flüssigkeitskanal (3) fließenden Flüssigkeit, und eine Durchflussrate des durch den Wärmemediumkanal (4) fließenden Wärmemediums zu regeln.

9. Regenerative Wärmeaustauschvorrichtung gemäß einem der Ansprüche 1 bis 8, welcher darüber hinaus eine Trennplatte (5) aufweist, die so angeordnet ist, dass die den Flüssigkeitskanal (3) und den Wärmemediumkanal (4) kreuzt.

10. Regenerative Wärmeaustauschvorrichtung gemäß Anspruch 9, wobei der Flüssigkeitskanal (3) und der Wärmemediumkanal (4) jeweils eine röhrenförmige Konfiguration aufweisen, wobei die Trennplatte (5) Folgendes aufweist:
eine erste Abdeckung (5a), um eine äußere Umfangsfläche des Flüssigkeitskanals (3) abzudecken,
eine zweite Abdeckung (5b), um eine äußere Umfangsfläche des Wärmemediumkanals (4) abzudecken, und
wobei ein Durchschnittsabstand zwischen der äußeren Umfangsfläche des Flüssigkeitskanals (3) und einer inneren Umfangsfläche der ersten Abdeckung (5a) größer als ein Durchschnittsabstand zwischen der äußeren Umfangsfläche des Wärmemediumkanals (4) und einer inneren Umfangsfläche der zweiten Abdeckung (5b) ist.

11. Regenerative Wärmeaustauschvorrichtung gemäß Anspruch 10, wobei die Trennplatte (5) eine solche Form aufweist, dass der Durchschnittsabstand zwischen einer äußeren Umfangsfläche des Wärmemediumkanals (4) und der inneren Umfangsfläche der zweiten Abdeckung (5b) in einem vertikal tiefer als der zweite gerade Leitungsabschnitt (4a) liegenden Bereich geringer als ein Durchschnittsabstand zwischen einer äußeren Umfangsfläche des Flüssigkeitskanals (3) und der inneren Umfangsfläche der ersten Abdeckung (5a) in einem vertikal tiefer als der erste gerade Leitungsabschnitt (3a) liegenden Bereich ist.

12. Regenerative Wärmaustauschvorrichtung gemäß einem der Ansprüche 9 bis 11, wobei die Trennplatte (5) einen Spalt (10) aufweist, der vertikal über dem zweiten geraden Leitungsabschnitt (4a) liegt.

13. Regenerative Wärmeaustauschvorrichtung gemäß einem der Ansprüche 9 bis 11, wobei die Trennplatte einen ausgeschnittenen und angehobenen Abschnitt (11) aufweist, wobei der ausgeschnittene und angehobene Ausschnitt (11) durch Ausschneiden und Anheben eines Teils der Trennplatte (5), der vertikal über dem zweiten geraden Leitungsabschnitt (4a) liegt, gebildet wird.

14. Regenerative Wärmeaustauschvorrichtung gemäß Anspruch 13, wobei der ausgeschnittene und angehobene Abschnitt (11) durch Ausschneiden und Anheben gebildet wird, so dass ein Schnitt in einem Schnittbereich des ausgeschnittenen und angehobenen Abschnitts vertikal tiefer als ein ungeschnitten gebliebener Teil des ausgeschnittenen und angehobenen Abschnitts (11) liegt.

15. Regenerative Wärmeaustauschvorrichtung gemäß einem der Ansprüche 1 bis 14, welche darüber hinaus ein Heizelement aufweist, das vertikal über dem Flüssigkeitskanal (3) liegt, an diesen angegrenzt und zur Beheizung desselben bestimmt ist.

## Revendications

1. Appareil d'échange de chaleur à régénération comprenant :
- un réservoir de stockage de chaleur (1) ;
- un matériau de stockage de chaleur (2) disposé à l'intérieur du réservoir de stockage de chaleur (1), le matériau de stockage de chaleur ayant une capacité de stockage de chaleur et une capacité de rejet de chaleur ;
- un passage à liquide (3) couvert par le matériau de stockage de chaleur (2) à l'intérieur du réservoir de stockage de chaleur (1), le passage à liquide (3) ayant une première portion tubulaire rectiligne (3a) à travers laquelle un liquide s'écoule horizontalement ; et
- un passage à fluide caloporteur (4) couvert par le matériau de stockage de chaleur (2) à l'intérieur du réservoir de stockage de chaleur (1), le passage à fluide caloporteur (4) étant adjacent à et constituant un groupe avec le passage à liquide (3), le passage à fluide caloporteur (4) ayant une seconde portion tubulaire rectiligne (4a) à travers laquelle un fluide caloporteur s'écoule horizontalement, le fluide caloporteur étant à une température plus élevée que le liquide,
**caractérisé en ce que**
- le matériau de stockage de chaleur (2) a une densité plus élevée dans un état solide que dans un état liquide,
- l'écoulement de liquide dans la première portion tubulaire rectiligne (3a) prend de la chaleur depuis le matériau de stockage de chaleur (2) et solidifie le matériau de stockage de chaleur qui était dans un état liquide, le fluide caloporteur dans la seconde portion tubulaire rectiligne (4a) donne de la chaleur au matériau de stockage de chaleur (2) et fait fondre le matériau de stockage de chaleur (2) qui était dans un état solide,
dans lequel la première portion tubulaire rectiligne (3a) est située verticalement plus bas que la seconde portion tubulaire rectiligne (4a), qui constitue un groupe avec la première portion tubulaire rectiligne (3a).

2. Appareil d'échange de chaleur à régénération selon la revendication 1,
dans lequel la seconde portion tubulaire rectiligne (4a) présente un diamètre tubulaire inférieur à un diamètre tubulaire de la première portion tubulaire rectiligne (3a).

3. Appareil d'échange de chaleur à régénération selon la revendication 1 ou 2,
dans lequel le passage à fluide caloporteur (4) comprend des passages dans un nombre supérieur au nombre de passages à liquide (3).

4. Appareil d'échange de chaleur à régénération selon l'une quelconque des revendications 1 à 3,
dans lequel la première portion tubulaire rectiligne (3a) et la seconde portion tubulaire rectiligne (4a) disposées dans un groupe sont agencées à des niveaux multiples dans une direction haut/bas,
dans lequel les secondes portions tubulaires rectilignes (4a) du passage à fluide caloporteur (4), qui sont adjacentes dans la direction haut/bas, sont reliées à l'une de leurs extrémités de sorte que le passage à fluide caloporteur (4) décrit des méandres dans la direction haut/bas, et
dans lequel les premières portions tubulaires rectilignes (3a) du passage à liquide, qui sont adjacentes dans la direction haut/bas, sont reliées à l'une de leurs extrémités de sorte que le passage à liquide (3) décrit de méandres dans la direction haut/bas.

5. Appareil d'échange de chaleur à régénération selon la revendication 4,
dans lequel une distance moyenne entre la première portion tubulaire rectiligne (3a) et la seconde portion tubulaire rectiligne (4a) disposées dans un groupe et agencées à des niveaux multiples dans la direction haut/bas est inférieure à une distance entre la seconde portion tubulaire rectiligne (4a) dans un niveau et la première portion tubulaire rectiligne (3a) dans un autre niveau adjacent audit un niveau.

6. Appareil d'échange de chaleur à régénération selon la revendication 4 ou 5,
dans lequel, vues dans une section transversale verticale du réservoir de stockage de chaleur (1), la première portion tubulaire rectiligne (3a) et la seconde portion tubulaire rectiligne (4a) disposées dans un groupe et agencées à des niveaux multiples dans la direction haut/bas sont disposées dans un agencement échelonné.

7. Appareil d'échange de chaleur à régénération selon l'une quelconque des revendications 4 à 6,
dans lequel une partie de connexion des secondes portions tubulaires rectilignes (4a), qui sont adjacentes dans la direction haut/bas, est située verticalement plus haut qu'une partie de connexion des premières portions tubulaires rectilignes (3a) qui sont adjacentes dans la direction haut/bas.

8. Appareil d'échange de chaleur à régénération selon l'une quelconque des revendications 1 à 7, comprenant en outre :
- un capteur de température (6) configuré pour détecter au moins une température parmi une température de liquide et une température de fluide caloporteur, la température de liquide étant une température du liquide s'écoulant à travers le passage à liquide (3), la température de fluide caloporteur étant une température du fluide caloporteur s'écoulant à travers le passage à fluide caloporteur (4) ; et
- une unité de commande de débit (9) configurée pour, sur la base d'une température détectée par le capteur de température (6), commander un débit du liquide à travers le passage à liquide (3) et un débit du fluide caloporteur à travers le passage à fluide caloporteur (4).

9. Appareil d'échange de chaleur à régénération selon l'une quelconque des revendications 1 à 8, comprenant en outre une plaque de séparation (5) positionnée pour croiser le passage à liquide (3) et le passage à fluide caloporteur (4).

10. Appareil d'échange de chaleur à régénération selon la revendication 9,
dans lequel le passage à liquide (3) et le passage à fluide caloporteur (4) présentent chacun une configuration tubulaire,
dans lequel la plaque de séparation (5) inclut
une première couverture (5a) pour couvrir une surface périphérique extérieure du passage à liquide (3),
une seconde couverture (5b) pour couvrir une surface périphérique extérieure du passage à fluide caloporteur (4), et
dans lequel une distance moyenne entre la surface périphérique extérieure du passage à liquide (3) et une surface périphérique intérieure de la première couverture (5a) est supérieure à une distance moyenne entre la surface périphérique extérieure du passage à fluide caloporteur (4) et une surface périphérique intérieure de la seconde couverture (5b).

11. Appareil d'échange de chaleur à régénération selon la revendication 10,
dans lequel la plaque de séparation (5) a une forme telle qu'une distance moyenne entre une surface périphérique extérieure du passage à fluide caloporteur (4) et la surface périphérique intérieure de la seconde couverture (5b) dans une région verticalement plus basse que la seconde portion tubulaire rectiligne (4a) est inférieure à une distance moyenne entre une surface périphérique extérieure du passage à liquide (3) et la surface périphérique intérieure de la première couverture (5a) dans une région verticalement plus basse que la première portion tubulaire rectiligne (3a).

12. Appareil d'échange de chaleur à régénération selon l'une quelconque des revendications 9 à 11,
dans lequel la plaque de séparation (5) inclut une fente (10) située verticalement au-dessus de la seconde portion tubulaire rectiligne (4a).

13. Appareil d'échange de chaleur à régénération selon l'une quelconque des revendications 9 à 11,
dans lequel la plaque de séparation inclut une portion découpée et relevée (11), la portion découpée et relevée (11) étant formée en découpant et en relevant une partie de la plaque de séparation (5) située verticalement au-dessus de la seconde portion tubulaire rectiligne (4a).

14. Appareil d'échange de chaleur à régénération selon la revendication 13,
dans lequel la portion découpée et relevée (11) est formée en la découpant et en la relevant de telle manière qu'une découpe dans une zone découpée de la portion découpée et relevée est située verticalement plus bas qu'une portion de la zone découpée et relevée (11) qui est laissée non découpée.

15. Appareil d'échange de chaleur à régénération selon l'une quelconque des revendications 1 à 14,
comprenant en outre un chauffage (8) situé verticalement au-dessus et de manière adjacente au passage à liquide (3) pour fournir de la chaleur au passage à liquide (3).
